# EUROPEAN PATENT SPECIFICATION

(11) **EP 2 720 506 B1**
(45) Date of publication and mention of the grant of the patent: **22.11.2017**
(21) Application number: 12290337.0
(22) Date of filing: 09.10.2012
(51) Int. Cl.: H04W 72/08

(54) **Altruistic scheduling in heterogeneous wireless networks**
Altruistische Zeitplanung in heterogenen drahtlosen Netzwerken
Planification altruiste dans des réseaux sans fil hétérogènes

(43) Date of publication of application: 16.04.2014
(73) Proprietor: ALCATEL LUCENT, 92100 Boulogne-Billancourt (FR)
(72) Inventor: Stanze, Oliver, 70499 Stuttgart (DE); Bakker, Hajo, 71735 Eberdingen (DE); Weber, Andreas, 74251 Lehrensteinsfeld (DE); Klein, Siegfried, 70469 Stuttgart (DE)
(74) Representative: Wetzel, Emmanuelle

(56) References cited:
- US-A1- 2011 310 802
- QUALCOMM INCORPORATED ET AL: "Enabling reporting of ABS resource status for eICIC purposes", 3GPP DRAFT; R3-110953, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Taipei, Taiwan; 20110221, 25 February 2011 (2011-02-25), XP050497849, [retrieved on 2011-02-25]
- ERICSSON: "Enhancements for coordination of ABS patterns", 3GPP DRAFT; R3-121820-ABS COORDINATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3 4 August 2012 (2012-08-04), XP050669604, Retrieved from the Internet: URL:http://www.3gpp.org/ftp/tsg_ran/WG3_Iu /TSGR3_77/Docs/ [retrieved on 2012-08-04]

## Description

### Technical Field

The disclosure relates to wireless communication systems, and more particularly to a method for data scheduling in heterogeneous wireless networks.

### Background

Enhanced Inter-cell Interference-Coordination (eICIC) is often applied in heterogeneous networks (HetNets) to maximize the system performance. eICIC is a time domain concept based on almost blank subframes (ABS), which do not contain data, sent by macro base stations causing interference to communication channels in a pico cell. If a macro base station sends an ABS this results in a reduced interference for user equipment (UEs) of the pico cell which can be exploited by advanced scheduling mechanisms. eICIC requires a so-called ABS pattern which defines in which subframes macro eNBs send ABS. To maximize the system performance the number of ABS in this pattern has to be determined based on parameters like user and traffic distribution, location of the pico eNB and may be dynamically adapted to these parameters by Self-Organizing Network (SON) algorithms.

US 2011/310802 discloses a method for receiving a request to dynamically change a subframe interlace. The subframe interlace is transitioned and during the transition either new data transmission is prevented on the prohibited subframe interlace and/or retransmissions are allowed on the prohibited subframe interface. Qualcomm Incorporated et al.: "Enabling reporting of ABS resource status for elCIC purposes", R3-110953, 25 February, 2011, discloses a method for adding information about the status of the ABS to the Resource Status Reporting procedure. Also, its initialisation is enabled in the Resource Status Reporting Initiation procedure. The 3GPP contribution "Enhancements for coordination of ABS patterns" (Ericsson, R3-121820, XP050669604) discloses coordination of ABS allocation for interference avoidance.

### Summary

It is an objective of the present invention to provide for an improved method in a wireless communication system, an improved computer program product and an improved measurement controller system as described by the subject matter of the independent claims. Advantageous embodiments are described in the dependent claims.

In one aspect, the invention relates to a method for addressing potential interference in a wireless communication system including at least a first network, a second network and a third network. The three networks may operate on the same frequency band. The term "network" as used herein, may generally denote a wireless network (e.g., mobile network, cellular network, non-cellular network, etc.). By way of example, the method may be performed in a variety of network types, such as Long Term Evolution (LTE) network or any communication system which applies an inter-cell interference coordination scheme which is based on subframe blanking.

For example, data transmissions on a first communication channel in the first network is interfering with data transmissions on a second communication channel in the second network. The interference may be caused by collisions between resource blocks that may be used simultaneously by the first and second network for data transmissions on the first communication channel and the second communication channel respectively.

The second network provides a first pattern indicating a first set of time periods during which the data transmissions on the second communication channel is limited while the data transmissions on the first communication channel is scheduled. A communication channel may be within a set of frequencies and time slots. The communication channel may comprise a set of communication links including for example one or more of the following: third-generation ("3G") wireless cellular links, fourth-generation ("4G") wireless cellular links.

The method comprises: receiving, by the third network, information indicating the first pattern; and scheduling, by the third network, data transmissions on a third communication channel in the third network based on the first pattern. For example, the data transmissions on the third communication channel is interfering with at least the data transmissions on the first communication channel. The interference here may concern the data transmissions on the third communication channel with an old scheduling scheme. The new scheduling of data transmissions on the third communication channel, which is performed based on the first pattern, may reduce the interference.

Other networks, in addition to the third network, may also receive the information, and may also schedule their data transmission based on the first pattern, wherein their data transmission is also interfering with the data transmissions on the first communication channel.

These features may be advantageous as they may further reduce the interference disturbing data transmission on the first communication channel, because the third network has adapted his scheduling of data transmission as well as the scheduling of unused resources in accordance with the first pattern. This may be done, for example, by scheduling the data transmissions on the third communication channel only during at least part of the time period during which the second network is also scheduling data transmission.

According to one embodiment, the method further comprising obtaining a current load value in the third network, and performing the scheduling if the current load value is lower than a predetermined load threshold value. A network with a light traffic volume has a light load. A network with a heavy traffic volume has a heavy load. The load in the third network may be estimated on the third communication channel by dividing the third communication channel usage with a number of available resource blocks for the third communication channel over a pre-determined time interval.

According to one embodiment, the method further comprises: allocating unutilized resources in the third network during the first set of time periods, wherein the resources comprise frequency bandwidths. The unutilized resources may be unutilized resources in the third communication channel. This may be advantageous as it may provide an optimal way leading to a maximal reduction of the interference caused by the third network and the second network. The allocation may be performed using the full frequency bandwidth of each of the set of time periods and/or part of the frequency bandwidth of each of the set of time periods. For example, if the amount of unused resources in the third network is smaller than an amount permitted during the first set of time periods, the third network may aggregate the unused resources to certain frequency sub-bands only, during the first set of time period.

According to one embodiment, the first pattern is further indicating a second set of time periods during which the data transmissions on the second communication channel is scheduled, wherein the scheduling of the data transmissions on the third communication channel is scheduled during the second set of time periods. The time periods may be ordered such that each time period of the first set of time periods is followed by a time period of the second set of time periods. According to one embodiment, the first pattern is further indicating a second set of time periods during which the data transmissions on the second communication channel is scheduled, the method further comprising: transmitting, by the third network, a second pattern indicating a third set of time periods , wherein the third set of time periods is overlapping with the second set of time periods, wherein the scheduling is scheduled during the overlapping time periods. That is, the third network may provide its own pattern in accordance with the first pattern. This pattern definition is more related to the mid and long term behavior of the third network. The second pattern definition may be based on information regarding expected future traffic load of the third network.

According to one embodiment, the allocating comprises determining unutilized resources of the third network; and allocating at least parts of the unutilized resources. For example, if the current and/or future traffic load is about 50%, the allocation may only concern a fraction of the expected free capacity (50%) e.g. 30%. The fraction of allocated resources is chosen to be lower than the fraction of expected unused resources, to avoid an overload situation in which the load is temporarily higher than the expected load.

According to one embodiment, the determining comprises determining current and/or future unutilized resources. For example, the future (or expected) unutilized resources may be determined by estimating expected traffic load in the third network using historical daytime traffic load statistics of the third network. This may be advantageous as it may prevent any future overloading situation in the third network.

According to one embodiment, the first and fourth set of time periods are aligned with each other. This may be advantageous as the time periods of the first and fourth set may be routed dependent of one another, which may facilitate scheduling in the third network with further interference reduction.

According to one embodiment, the first network comprises a pico cell comprising a first base station and a first user device, wherein the first communication channel is linking the first base station and the first user device, the second network comprising a first macro cell at least partially overlapping an area of the pico cell, wherein the second communication channel is linking a second base station of the first macro cell and a second user device. In another example, the first network may be a relay cell. This may be advantageous, as the present method may be applied in a heterogeneous network system. The second user device may belong to the overlapping area. In another example, the second user device may be the first user device.

According to one embodiment, the third network comprises a second macro cell neighboring the first macro cell and the pico cell, wherein a third communication channel is linking a third base station of the third network and a third user device.

According to one embodiment, the wireless communication system is a part of a 3rd Generation Partnership Project Long Term Evolution (3GPP LTE) Standard heterogeneous network.

According to one embodiment, each of the first and the fourth set of time periods comprises almost blank subframes (ABS). The term "subframe" as used herein refers to any lower frame structure created by dividing one frame into a units of a predetermined length.

In another aspect, the invention relates to a computer program product comprising computer executable instructions to perform the method steps of the method described above.

In another aspect, the invention relates to a measurement controller for use in a wireless communication system including at least a first network, a second network and a third network, the measurement controller comprising a memory for storing machine executable instructions and a processor for controlling the measurement controller, wherein execution of the machine executable instructions causes the processor to: receive information indicating a first pattern, the first pattern indicating a first set of time periods during which data transmissions on the second communication channel is limited while the data transmissions on the first communication channel is scheduled; and schedule data transmissions on a third communication channel in the third network based on the first pattern.

The measurement controller may be located in the third base station of the third network.

It is understood that one or more of the aforementioned embodiments may be combined as long as the combined embodiments are not mutually exclusive.

### Brief description of the drawings

In the following embodiments of the invention are explained in greater detail, by way of example only, making reference to the drawings in which:
Fig. 1 shows a cell structure in a wireless communication system,
Fig. 2 is a diagram illustrating a format of an ABS pattern,
Fig. 3 shows a cell structure used in a simulation of the present subject matter,
Fig. 4 shows gain in pico UE geometry due to macro eNB neighbors altruistic pattern adaptation, and
Fig. 5 shows performance gains due to altruistic cell neighbors.

### Detailed description

In the following, like numbered elements in these figures are either similar elements or perform an equivalent function. Elements which have been discussed previously will not necessarily be discussed in later figures if the function is equivalent.

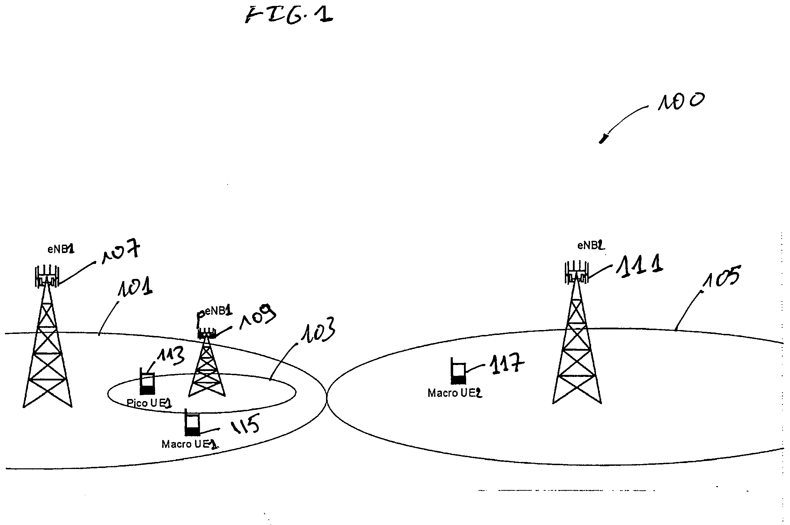

Fig. 1 shows a cell structure 100 as part of a wireless communication system of a heterogeneous network. The wireless communication system may be any communication system which applies an inter-cell interference coordination scheme which is based on subframe blanking such as an LTE system. The cell structure is separated into three regions or cells 101, 103 and 105. A macro cell 101 is served by a first base station, such an eNB1 107. The macro cell 101 is at least partially overlapping an area of a pico cell 103. The pico cell 103 is served by a second base station peNB1 109. A macro cell 105 is neighboring the two cells 101 and 103. The macro cell 105 is served by a base station eNB2 111. A user equipment UE 113 can access the wireless communication system 100 by communicating with the base station peNB1 109. Other user equipment 115 and 117 can access the wireless communication system 100 by communicating with the base stations eNB1 107 and the eNB2 111 respectively. The base stations eNB1, peNB1 and eNB2 107, 109 and 111 are communicatively coupled to each other though interface units. The interface unit may be, for example, X2 interface defined by the Long Term Evolution (LTE) of 3GPP standards and/or protocols. These interfaces are used to support inter-cellular communication and signaling. The cells are depicted in Fig. 1 as idealized circles in the interest of clarity and to avoid obscuring the description. However, persons of ordinary skill in the art should appreciate that cells typically have an irregular and variable shape that is determined by numerous factors including, but not limited to, transmission powers of the base stations, transmission power distributions of the base stations, physical obstacles, changing environmental conditions, and the like.

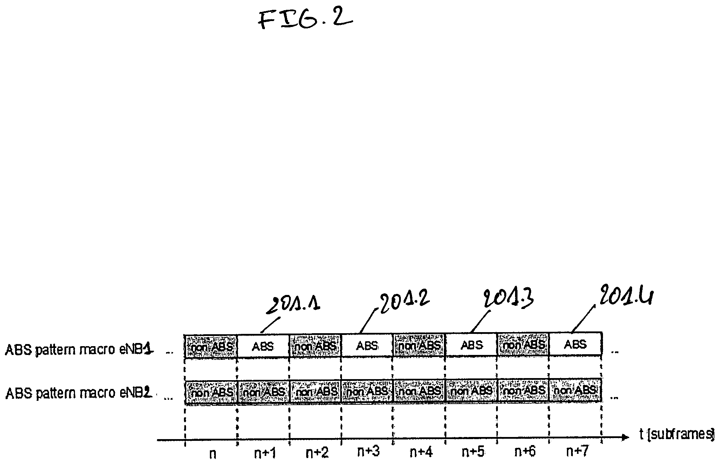

A first communication channel is linking the peNB1 109 and the UE 113. UE 113 may be unable to connect to eNB1 107 as it is served by the peNB1 109. eNB1 107 may be causing interference to the first communication channel via another communication channel linking the enB1 107 and the UE 113, and thus, eNB1 107 may begin elCIC procedures, by providing a first ABS pattern indicating a first set of time periods comprising ABS subframes and a second set of time periods comprising non-ABS subframes (see Fig. 2). One time period may be a time window having the same length as a subframe. eNB1 107 may transmit a LOAD information to peNB1 109 and eNB2 111 via X2 interface. The information may indicate the ABS pattern which is applied by eNB1 107.

The ABS subframe information may be used to determine on which subframes eNB1 107 may be in a limited broadcasting mode i.e. no data or almost no data transmission. peNB1 109 may use this information to adapt its scheduling in a way that it may preferably schedule UEs which are most effected by the interference of the macro cells to the ABS to maximize the performance gain. If macro eNB2 111 has multiple neighbors, e.g. a neighboring macro eNB3, which apply elCIC procedures, it is assumed that the ABS pattern of macro eNB1 and macro eNB3 are synchronized, i.e. all ABS in the pattern with lower number of ABS overlap with ABS in the pattern with higher number of ABS. This reduces the interference during ABS for pico UEs.

Upon receiving, by the eNB2 111, information indicating the first pattern (i.e. ABS pattern); eNB2 111 may perform the steps:
1. allocate unutilized resources in the third network during the first set of time periods, and may schedule the data transmissions on the third communication channel during the second set of time periods, and/or
2. transmit, a second pattern indicating a third set of time periods. The second pattern indicates a third and a fourth set of time periods. The third set of time periods is overlapping with the second set of time periods. eNB2 111 may schedule the data transmissions on the third communication channel during the overlapping time periods of the third and the second time periods. The fourth set of time periods overlapping with the first set of time periods, wherein eNB2 111 may allocate unutilized resources in the third network during the overlapping time periods of the first and the fourth sets. The first and fourth set of time periods are aligned with each other. The second and third set of time periods are aligned with each other.

For the allocating, enB2 111 may determine current and/or future unutilized resources of the third network; and allocate at least part of the unutilized resources.

The steps 1 and 2 may be performed if the macro enB2 111 is not operating at full load. For example, the enB2 111 may determine a current load value and compare it with a predetermined threshold load value. In case the current load value exceeds the threshold value, the enB2 111 may be considered as being at full load. In another example, the enB2 may perform the steps 1 and 2 as soon as there are unutilized resources available at the enB2 111.

The scheduling in step 1 may be an altruistic scheduling because macro eNB2 111 or its UEs, e.g. macro UE2 117, will not profit from said scheduling, as macro enB2 111 will aggregate its traffic to those subframes in which macro eNB1 107 sends non ABS, e.g. subframes n, n+2 n+4, n+6 of Fig. 2, and thereby will aggregate its unused resources to those subframes in which macro eNB1 107 sends ABS, e.g. the subframes n+1, n+3, n+5, n+7 of Fig. 2. By concentrating unused resources to the ABS of macro eNB1 107, the interference reduction for peNB2 UEs, e.g. pico UE1 113, in ABS is maximized.

If the amount of unused resources of macro eNB2 111 is smaller than the amount of ABS resources of macro eNB1 107, macro eNB2 111 may aggregate the unused resources to certain frequency sub-bands only, of the subframes in which macro eNB A sends ABS. This will limit the additional interference reduction for pico UEs of pico eNB to certain sub-bands of the ABS and therefore will be reflected in frequency selective CQI feedback and can be exploited by scheduling.

While altruistic scheduling is more related to the short term behavior of macro eNB2 111, altruistic ABS pattern adaptation which is described in step 2 is more related to the mid and long term behavior of macro eNB2 111. Altruistic ABS pattern adaptation operates on information regarding the expected traffic load of (or expected unutilized resources) eNB2 111, e.g. long term daytime traffic load statistics of the cell. For example, if eNB2 111 has the information, that its expected traffic load in the next hour is about 50%, than it may declare a fraction of its expected free capacity as ABS, e.g. 30%. Macro eNB2 111 sends a LOAD INFORMATION message which includes an ABS Information Element (IE) to its neighboring eNBs including macro eNB1 107. The ABS IE includes the ABS pattern of the eNB2 111 which is aligned to the ABS pattern of macro eNB1 107. This is an altruistic behavior of the eNB2 111 because macro eNB2 111 itself and its UEs will not profit by declaring these resources as ABS. The neighboring cell served by peNB1 109, will profit from this altruistic behavior of macro eNB2 111 due to the reduced interference during ABS which can be exploited by scheduling.

Macro eNB2 111 may not provide its complete expected free capacity during ABS subframes, as there may be an overload situation in which the load is higher than the expected load. The fraction of declared (or provided) resources during ABS subframes should be significant lower than the fraction of expected unused resources. Altruistic scheduling of step 1 may be performed on top of the altruistic ABS pattern adaptation to handle the gap between expected unused resources and fraction of declared resources during ABS subframes. If the altruistic ABS pattern adaptation leads to a permanent overload situation in the altruistic cell, macro eNB2 111 may reduce the fraction of declared resources during ABS subframes (i.e. reducing declared number of ABS subframes). It may do this at any time and inform its neighboring eNBs such as eNB1 107 and peNB 109 about this by sending a LOAD INFORMATION message which includes the changed ABS pattern.

Fig. 2 shows a simplified structure of an ABS pattern sent by eNB1 107 and eNB2 111. The ABS pattern may be defined over an interval time period or interval length, for example an interval length of 40 ms, however other interval lengths both shorter and longer are possible

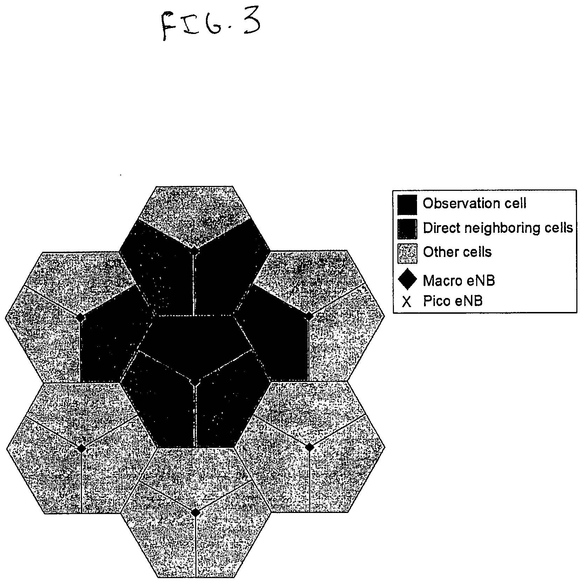

For the purpose of explanation, the simulation presented in Fig. 3 can be implemented in the cell structure of Fig. 1, but is not limited to this implementation. Therefore, reference numerals from Fig. 1 are not necessarily used in Fig. 3.

The potential of the present method is shown in the following simulation results. Fig. 3 shows a simulation scenario of a cell structure. There is one so-called observation cell. Inside the coverage area of the observation cell there are 2 randomly pico eNB which are placed at UE HotSpots (-> see configuration 4B in 3GPP 36.814). Inside the observation cell, elCIC and the cell range expansion CRE is applied to increase the system performance. Around the observation cell there are six direct neighboring cells (blue). The neighboring macro eNBs serving the neighboring cells may perform altruistic scheduling and/or ABS pattern adaptation. The 15 other cells (orange) which are not a direct neighbor of the observation cell, will (in this scenario) not perform altruistic scheduling and/or ABS pattern adaptation. There are no pico eNBs inside the direct neighboring cells and the other cells. Therefore, these cells do not apply elCIC, i.e. the corresponding macro eNBs do not send ABS (except if a macro eNB of a direct neighboring cell performs an altruistic ABS pattern adaptation). The cells are depicted in Fig. 3 as idealized hexagonal in the interest of clarity and to avoid obscuring the description. However, persons of ordinary skill in the art should appreciate that cells typically have an irregular and variable shape that is determined by numerous factors including, but not limited to, transmission powers of the base stations, transmission power distributions of the base stations, physical obstacles, changing environmental conditions, and the like.

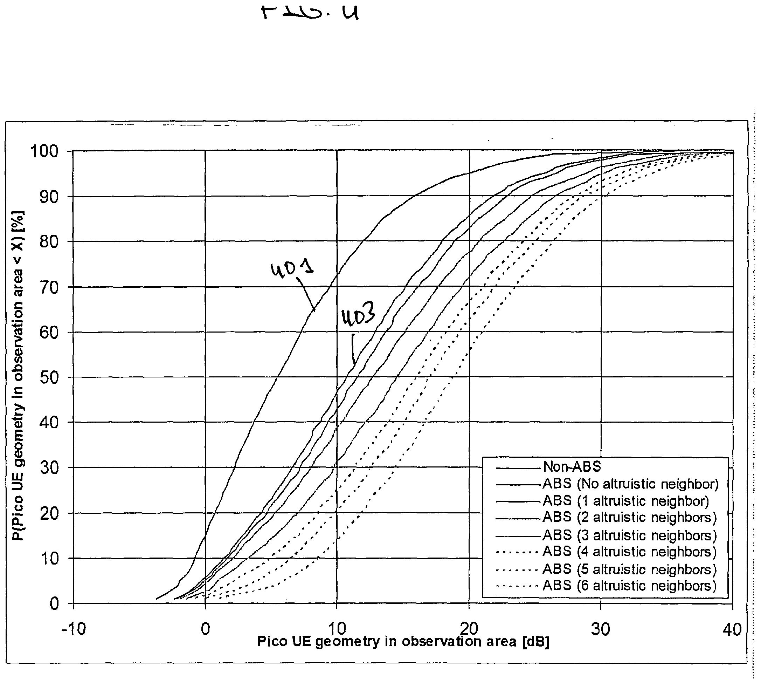

Fig. 4 shows the impact of altruistic neighbors on the geometry of pico UEs in the observation cell. The black solid line 401 shows the pico UE geometry in non-ABS, i.e. all macro eNBs are transmitting. The solid red line 403 shows the pico UE geometry if only the macro eNB of the observation cells send an ABS while all other macro eNBs are sending non-ABS. The remaining lines show the geometry of the pico UE in ABS of the observation cell and different numbers of altruistic neighbors, which also send ABS. The figure shows that an increasing number of altruistic neighbors has a positive effect on the pico UE geometry in ABS. Each additional altruistic neighbor improves the pico UE geometry by 1-2 dB. This improvement is based on the reduced interference of the direct neighboring cells. The gains in the pico UE geometry due to the altruistic neighbors results in an increased system performance inside the observation cell.

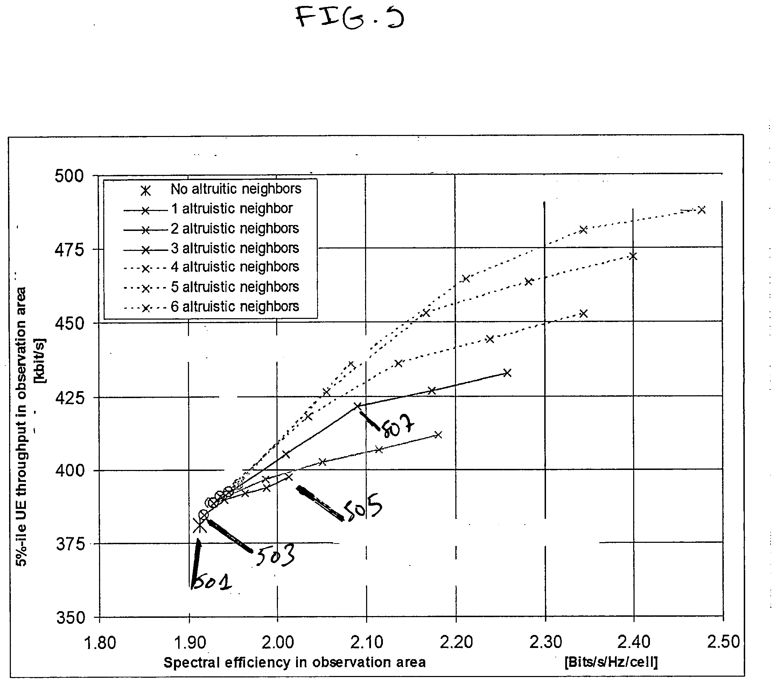

Fig. 5 shows the 5%-ile of the UE throughput (aka cell-border throughput) over the spectral efficiency in the observation cell for different numbers of altruistic neighbors and different numbers of ABS sent by these altruistic neighbors. The star 501 in Fig. 5 shows the reference value, i.e. the macro eNB does not apply elCIC. The solid blue line 505 shows the results for 1 altruistic neighbor which sends 10% ABS (circle) 501, 20% , 30%, 40 and 50% ABS. The figure shows gains in cell-border throughput and spectral efficiency compared to the reference scenario 501, e.g. 9% gain in spectral efficiency and 10% gain in cell-border throughput if the observation cell and 3 altruistic neighbors send 30% ABS 507. The gain increases with increasing number of altruistic neighbors and increasing ABS fraction. If all direct neighbors are altruistic and use the same ABS pattern as the observed macro the gain is up to 29% in spectral efficiency and 28% in cell border throughput.

### List of reference numerals

100 cell structure
101 macro cell
103 pico cell
105 macro cell
107 macro base station
109 pico base station
111 macro base station
113-115 user equipment.
201 ABS subframes.
401-403 curves.
501-507 curve points.

## Claims

1. A method for addressing potential interference in a wireless communication system including at least a first network (103), a second network (101) and a third network (105), the method comprising: receiving, by the third network (105), information indicating a first pattern, the first pattern indicating a first set of time periods (201) during which data transmissions on a communication channel in the second network (101) is limited while the data transmissions on a communication channel in the first network (103) is scheduled; obtaining, by the third network (105), a current load value in the third network; and scheduling, by the third network (105), data transmissions on a communication channel in the third network (105) based on the first pattern if the current load value is lower than a pre-determined load threshold value.

2. The method of claim 1, further comprising: allocating by the third network (105) unutilized resources in the third network (105) during the first set of time periods, wherein the resources comprise frequency bandwidths.

3. The method of any of the previous claims, wherein the first pattern is further indicating a second set of time periods during which the data transmissions on the communication channel in the second network (101) are scheduled, wherein the scheduling of the data transmissions on the communication channel in the third network (105) is performed during the second set of time periods.

4. The method of claim 1, wherein the first pattern is further indicating a second set of time periods during which the data transmissions on the communication channel in the second network (101) are scheduled, the method further comprising: transmitting, by the third network (105), a second pattern indicating a third set of time periods , wherein the third set of time periods is overlapping with the second set of time periods, wherein the scheduling is performed during the overlapping time periods.

5. The method of claim 4, wherein the second pattern is further indicating a fourth set of time periods overlapping with the first set of time periods, the method further comprising allocating by the third network (105) unutilized resources in the third network (105) during the overlapping time periods.

6. The method of claim 2 or 5, wherein the allocating comprises:
- determining unutilized resources of the third network (105); and
- allocating at least parts of the unutilized resources.

7. The method of claim 6, wherein the determining comprises determining current and/or future unutilized resources.

8. The method of any of the previous claims 4 -7, wherein the first and fourth set of time periods are aligned with each other.

9. The method of any of the previous claims, wherein the first network (103) comprises a pico cell comprising a first base station (109) and a first user device (113), wherein the communication channel in the first network (103) is linking the first base station (109) and the first user device (113), the second network (101) comprising a first macro cell at least partially overlapping an area of the pico cell, wherein the communication channel in the second network (101) is linking a second base station (107) of the first macro cell and a second user device (115).

10. The method of claim 9 wherein the third network (105) comprises a second macro cell neighboring the first macro cell and the pico cell, wherein the communication channel in the third network (105) is linking a third base station (111) of the third network (105) and a third user device (117).

11. The method of any of the previous claims, wherein the wireless communication system is a part of a 3rd Generation Partnership Project Long Term Evolution (3GPP LTE) Standard heterogeneous network.

12. The method of claim 11, wherein each of the first and the fourth set of time periods comprises almost blank subframes (ABS).

13. A computer program product comprising computer executable instructions which, when run on a computer, perform the method steps of the method of any one of the preceding claims.

14. A measurement controller for a wireless communication system including at least a first network (103), a second network (101) and a third network (105), the measurement controller comprising a memory for storing machine executable instructions and a processor for controlling the measurement controller, wherein execution of the machine executable instructions causes the processor to: receive information indicating a first pattern, the first pattern indicating a first set of time periods (201) during which data transmissions on a communication channel in the second network (101) is limited while the data transmissions on a communication channel in the first network (103) is scheduled; obtain a current load value in the third network; and schedule data transmissions on a communication channel in the third network based on the first pattern if the current load value is lower than a predetermined load threshold value.

## Patentansprüche

1. Verfahren zum Ansprechen potenzieller Störungen in einem drahtlosen Kommunikationssystem, einschießend mindestens ein erstes Netzwerk (103), ein zweites Netzwerk (101) und ein drittes Netzwerk (105), wobei das Verfahren umfasst: Empfangen durch das dritte Netzwerk (105) von Information, die ein erstes Muster anzeigt, wobei das erste Muster einen ersten Satz von Zeiträumen (201) anzeigt, während denen Datenübertragungen auf einem Kommunikationskanal in dem zweiten Netzwerk (101) eingeschränkt sind, während die Datenübertragungen auf einem Kommunikationskanal in dem ersten Netzwerk (103) geplant sind; Erhalten mittels des dritten Netzwerks (105) eines momentanen Lastwertes in dem dritten Netzwerk; und Planen mittels des dritten Netzwerks (105) von Datenübertragungen auf einem Kommunikationskanal in dem dritten Netzwerk (105) auf Grundlage des ersten Musters, wenn der momentane Lastwert geringer ist als ein vorbestimmter Lastschwellenwert.

2. Verfahren nach Anspruch 1, weiterhin umfassend: Zuweisen mittels des dritten Netzwerks (105) nicht verwendeter Ressourcen in dem dritten Netzwerk (105) während des ersten Satzes von Zeiträumen, wobei die Ressourcen Frequenzbandweiten umfassen.

3. Verfahren nach einem beliebigen der vorhergehenden Ansprüche, wobei das erste Muster weiterhin anzeigt einen zweiten Satz von Zeiträumen, während denen die Datenübertragungen auf dem Kommunikationskanal in dem zweiten Netzwerk (101) geplant sind, wobei das Planen der Datenübertragungen auf dem Kommunikationskanal in dem dritten Netzwerk (105) während des zweiten Satzes von Zeiträumen durchgeführt werden.

4. Verfahren nach Anspruch 1, wobei das erste Muster weiterhin anzeigt einen zweiten Satz von Zeiträumen, während denen die Datenübertragungen auf dem Kommunikationskanal in dem zweiten Netzwerk (101) geplant sind, wobei das Verfahren weiterhin umfasst: Übertragen mittels des dritten Netzwerks (105) eines zweiten Musters, das einen dritten Satz von Zeiträumen anzeigt, wobei der dritte Satz von Zeiträumen mit dem zweiten Satz von Zeiträumen überlappt, wobei das Planen während der überlappenden Zeiträume durchgeführt wird.

5. Verfahren nach Anspruch 4, wobei das zweite Muster weiterhin anzeigt einen vierten Satz von Zeiträumen, der mit dem ersten Satz von Zeiträumen überlappt, wobei das Verfahren weiterhin umfasst das Zuweisen mittels des dritten Netzwerks (105) nicht verwendeter Ressourcen in dem dritten Netzwerk (105) während der überlappenden Zeiträume.

6. Verfahren nach Anspruch 2 oder 5, wobei das Zuweisen umfasst:
- Bestimmen nicht verwendeter Ressourcen des dritten Netzwerks (105); und
- Zuweisen mindestens von Teilen der nicht verwendeten Ressourcen.

7. Verfahren nach Anspruch 6, wobei das Bestimmen umfasst das Bestimmen von momentanen und/oder künftigen nicht verwendeten Ressourcen.

8. Verfahren nach einem beliebigen der vorhergehenden Ansprüche 4-7, wobei der erste und der vierte Satz von Zeiträumen aufeinander abgestimmt sind.

9. Verfahren nach einem beliebigen der vorhergehenden Ansprüche, wobei das erste Netzwerk (103) umfasst eine Pico-Zelle, umfassend eine erste Basisstation (109) und ein erstes Teilnehmergerät (113), wobei der Kommunikationskanal in dem ersten Netzwerk (103) die erste Basisstation (109) und das erste Teilnehmergerät (113) verbindet, wobei das zweite Netzwerk (101) umfasst eine erste Makro-Zelle, die mindestens teilweise einen Bereich der Pico-Zelle überlappt, wobei der Kommunikationskanal in dem zweiten Netzwerk (101) eine zweite Basisstation (107) der ersten Makro-Zelle und ein zweites Teilnehmergerät (115) verbindet.

10. Verfahren nach Anspruch 9, wobei das dritte Netzwerk (105) umfasst eine zweite Makro-Zelle, die der ersten Makro-Zelle und der Pico-Zelle benachbart ist, wobei der Kommunikationskanal in dem dritten Netzwerk (105) eine dritte Basisstation (111) des dritten Netzwerks (105) und ein drittes Teilnehmergerät (117) verbindet.

11. Verfahren nach einem beliebigen der vorhergehenden Ansprüche, wobei das drahtlose Kommunikationssystem Teil ist eines heterogenen 3GPPLTE-(3rd Generation Partnership Project Long Term Evolution)-Standardnetzwerks ist.

12. Verfahren nach Anspruch 11, wobei jeder der ersten und vierten Sätze von Zeiträumen fast leere Unterrahmen (ABS) umfasst.

13. Computer-Programmprodukt umfassend computerausführbare Befehle, die,
wenn sie auf einem Computer ausgeführt werden, die Schritte des Verfahrens nach einem beliebigen der vorhergehenden Ansprüche ausführen.

14. Mess-Controller für ein drahtloses Kommunikationssystem, einschießend mindestens ein erstes Netzwerk (103), ein zweites Netzwerk (101) und ein drittes Netzwerk (105), wobei der Mess-Controller einen Speicher umfasst zum Speichern maschinenausführbarer Befehle und einen Prozessor zum Steuern des Mess-Controllers, wobei das Ausführen der maschinenausführbaren Befehle bewirkt, dass der Prozessor: Information empfängt, die ein erstes Muster anzeigt, wobei das erste Muster einen ersten Satz von Zeiträumen (201) anzeigt, während denen Datenübertragungen auf einem Kommunikationskanal in dem zweiten Netzwerk (101) eingeschränkt sind, während die Datenübertragungen auf einem Kommunikationskanal in dem ersten Netzwerk (103) geplant sind; einen momentanen Lastwert in dem dritten Netzwerk erhält; und mittels des dritten Netzwerks von Datenübertragungen auf einem Kommunikationskanal in dem dritten Netzwerk auf Grundlage des ersten Musters plant, wenn der momentane Lastwert geringer ist als ein vorbestimmter Lastschwellenwert.

## Revendications

1. Procédé de résolution d'une interférence potentielle dans un système de communication sans fil comprenant au moins un premier réseau (103), un deuxième réseau (101) et un troisième réseau (105), le procédé comprenant les étapes suivantes : recevoir, au moyen du troisième réseau (105), des informations indiquant une première configuration, la première configuration indiquant un premier ensemble de périodes (201) durant lesquelles des transmissions de données sur un canal de communication dans le deuxième réseau (101) sont limitées alors que les transmissions de données sur un canal de communication dans le premier réseau (103) sont planifiées ; obtenir, au moyen du troisième réseau (105), une valeur de charge actuelle dans le troisième réseau ; et planifier, au moyen du troisième réseau (105), des transmissions de données sur un canal de communication dans le troisième réseau (105) sur la base de la première configuration si la valeur de charge actuelle est inférieure à une valeur seuil de charge prédéterminée.

2. Procédé selon la revendication 1, comprenant en outre l'étape suivante : attribuer, au moyen du troisième réseau (105), des ressources non utilisées dans le troisième réseau (105) durant le premier ensemble de périodes, dans lequel les ressources comprennent des largeurs de bande de fréquences.

3. Procédé selon l'une quelconque des revendications précédentes, dans lequel la première configuration indique en outre un deuxième ensemble de périodes durant lesquelles les transmissions de données sur le canal de communication dans le deuxième réseau (101) sont planifiées, dans lequel la planification des transmissions de données sur le canal de communication dans le troisième réseau (105) est effectuée durant le deuxième ensemble de périodes.

4. Procédé selon la revendication 1, dans lequel la première configuration indique en outre un deuxième ensemble de périodes durant lesquelles les transmissions de données sur le canal de communication dans le deuxième réseau (101) sont planifiées, le procédé comprenant en outre l'étape suivante : transmettre, au moyen du troisième réseau (105), une deuxième configuration indiquant un troisième ensemble de périodes, dans lequel le troisième ensemble de périodes chevauche le deuxième ensemble de périodes, dans lequel la planification est effectuée durant les périodes de chevauchement.

5. Procédé selon la revendication 4, dans lequel la deuxième configuration indique en outre un quatrième ensemble de périodes chevauchant le premier ensemble de périodes, le procédé comprenant en outre l'attribution par le troisième réseau (105) de ressources non utilisées dans le troisième réseau (105) durant les périodes de chevauchement.

6. Procédé selon la revendication 2 ou 5, dans lequel l'attribution comprend les étapes suivantes :
- déterminer des ressources non utilisées du troisième réseau (105) ; et
- attribuer au moins des parties des ressources non utilisées.

7. Procédé selon la revendication 6, dans lequel la détermination comprend la détermination de ressources non utilisées actuelles et/ou futures.

8. Procédé selon l'une quelconque des revendications précédentes 4 à 7, dans lequel le premier et le quatrième ensembles de périodes sont alignés l'un par rapport à l'autre.

9. Procédé selon l'une quelconque des revendications précédentes, dans lequel le premier réseau (103) comprend une picocellule comprenant une première station de base (109) et un premier dispositif utilisateur (113), dans lequel le canal de communication dans le premier réseau (103) relie la première station de base (109) au premier dispositif utilisateur (113), le deuxième réseau (101) comprenant une première macrocellule qui chevauche au moins partiellement une zone de la picocellule, dans lequel le canal de communication dans le deuxième réseau (101) relie une deuxième station de base (107) de la première macrocellule à un deuxième dispositif utilisateur (115).

10. Procédé selon la revendication 9 dans lequel le troisième réseau (105) comprend une deuxième macrocellule voisine de la première macrocellule et de la picocellule, dans lequel le canal de communication dans le troisième réseau (105) relie une troisième station de base (111) du troisième réseau (105) à un troisième dispositif utilisateur (117).

11. Procédé selon l'une quelconque des revendications précédentes, dans lequel le système de communication sans fil fait partie d'un réseau hétérogène standard d'évolution à long terme du projet de partenariat de troisième génération (3GPP LTE).

12. Procédé selon la revendication 11, dans lequel chacun des premier et quatrième ensembles de périodes comprend des sous-trames presque vides (ABS).

13. Produit de programme informatique comprenant des instructions exécutables par ordinateur qui, lorsqu'elles sont exécutées sur un ordinateur, effectuent les étapes de procédé du procédé selon l'une quelconque des revendications précédentes.

14. Contrôleur de mesure pour un système de communication sans fil comprenant au moins un premier réseau (103), un deuxième réseau (101) et un troisième réseau (105), le contrôleur de mesure comprenant une mémoire pour stocker des instructions exécutables par une machine et un processeur pour contrôler le contrôleur de mesure, dans lequel l'exécution des instructions exécutables par une machine entraîne les actions suivantes du processeur : recevoir des informations indiquant une première configuration, la première configuration indiquant un premier ensemble de périodes (201) durant lesquelles des transmissions de données sur un canal de communication dans le deuxième réseau (101) sont limitées alors que les transmissions de données sur un canal de communication dans le premier réseau (103) sont planifiées ; obtenir une valeur de charge actuelle dans le troisième réseau ; et planifier des transmissions de données sur un canal de communication dans le troisième réseau sur la base de la première configuration si la valeur de charge actuelle est inférieure à une valeur seuil de charge prédéterminée.
